# EUROPÄISCHE PATENTSCHRIFT

(11) **EP 0 862 008 B1**
(45) Veröffentlichungstag und Bekanntmachung des Hinweises auf die Patenterteilung: **09.05.2001**
(21) Anmeldenummer: 98103170.1
(22) Anmeldetag: 24.02.1998
(51) Int. Cl.: F16L 5/00, F16L 3/233, F16L 3/137, H02G 3/30

(54) **Halter**
Holder
Support

(30) Priorität: 26.02.1997 DE 19707637
(43) Veröffentlichungstag der Anmeldung: 02.09.1998
(73) Patentinhaber: J. van Walraven B.V., 3640 RK Mijdrecht (NL)
(72) Erfinder: Jakob, Peter, 69569 Weinheim (DE)
(74) Vertreter: Weiss, Peter, Dr. rer. nat.

(56) Entgegenhaltungen:
- EP-A- 0 722 062
- FR-A- 1 290 021
- US-A- 3 214 809
- US-A- 3 632 071

## Beschreibung

Die vorliegende Erfindung betrifft einen Halter zum wiederlösbaren Festlegen eine Gegenstandes oder zum Festlegen an einem Gegenstand nach dem Oberbegriff von Anspruch 1.

Derartige Halter sind insbesondere als Rohrschellen zum Festlegen von Schläuchen oder zum Befestigen von Leitungen bekannt. Diese Halter werden vor allen Dingen dann eingesetzt, wenn bspw. ein Schlauch auf einen Anschluss gezogen wird, um mit diesem wiederlösbar verbunden zu werden. Dabei wird ein Band mit Schlitzen od.dgl. verwendet, welches mittels einer schneckenartigen Schraubvorrichtung verkürzt oder verlängert werden kann.

Ferner sind Halterungen bspw. aus dem Strassenbau bekannt, wobei zwischen zwei halbschalenartigen Schellen ein Gegenstand eingespannt wird. An einer solchen Schelle ist dann ggf. ein Schild, Wegweiser oder ein sonstiges Zeichen angebracht.

Nachteilig an derartigen Haltern ist, dass diese auf die äussere Kanten ganz bestimmter Gegenstände, Rohre, Stäbe angepasst sein müssen. Die vor allem in der Automobilindustrie verwendeten Schellen sind zwar dazu geeignet, einen Durchmesser zu verringern, jedoch gelingt dies nur bis zu einem ganz gewissen Grad.

Ferner sind derartige Halter mit Schellen sehr unhandlich, schwierig zu montieren und deshalb nur begrenzt einsetzbar.

Aus der FR-A-1 290 021 ist ferner ein Kabelhalter bekannt, welcher aus einem Befestigungsblock zum Anschrauben an eine Wand od. dgl. und einem Band besteht. Der Befestigungsblock besitzt zwei Schlitze für das Band. Das Band wird in einem Ende nahe einem Schlitz an einem Stift festgelegt, um die Kabel geschlungen, durch den ersten Schlitz geführt, gespannt und ebenfalls an dem oben erwähnten Stift festgelegt. Das Spannen geschieht von Hand, wobei die Spannung selbst vom Abstand der Löcher für den Stift abhängig ist.

Aus der US-A-3 632 071 ist eine ähnliche Einrichtung zum Festlegen von Kabeln bekannt. Allerdings wird hier das Band nicht direkt an dem Halteblock oder einem Stift festgelegt, sondern ein Ende weist eine Schnalle für das andere Bandende auf, so dass das andere Bandende in die Schnalle gesteckt und dort durch Festziehen verankert werden kann.

Ein Halter der o. g. Art ist aus der EP-A-722 062 bekannt. In einer Aufnahme befindet sich ein Bolzenabschnitt, der von einem Band umschlungen wird. Das Band wird dabei durch zwei Schlitze eines kissenförmigen Elementes, welches als Auflager für die Kabel dient, geführt. Wie bei der US-A-3 632 971 weist ebenfalls ein Ende des Bandes eine Schnalle auf, durch die das andere Ende gesteckt und festgezurrt wird.

Der vorliegenden Erfindung liegt deshalb die Aufgabe zugrunde, einen Halter zu schaffen, welcher die o.g. Nachteile beseitigt, mit welchem ein schnelles und sicheres Festlegen von Gegenständen oder von Haltern an beliebigen Gegenständen möglich ist, ohne dass verschiedene Bauteile und unterschiedliche Grössen von Haltern verwendet werden müssen. Ferner soll die Handhabbarkeit insbesondere bei der Montage verbessert werden, da auch dadurch Kosten reduziert werden können.

Zur Lösung dieser Aufgabe führt, dass der gattungsgemäße Halter die Merkmale des kennzeichnenden Teils von Anspruch 1 aufweist. Der Vorteil dieses Halters ist, dass die Aufnahme so ausgestaltet sein kann, dass sie sicher an dem Gegenstand festgelegt wird. Ferner dient diese Aufnahme der Anordnung von weiteren Kennzeichnungselementen, wie bspw. Schildern.

Die Aufnahme besteht im wesentlichen aus zwei Wänden, welche über einen Steg miteinander verbunden sind. In etwa mittig im Steg ist bei einem Ausführungsbeispiel eine Öffnung vorgesehen, durch welche eine Schraube greift. Diese Schraube ist mit der Grundplatte und insbesondere mit einer dort in etwa mittig vorgesehenen Mutter verbunden, so dass durch Verdrehen der Schraube diese Grundplatte sich entlang der Schraube bewegen lässt. Zwischen Grundplatte und Steg ist bevorzugt eine Feder eingesetzt, welche die Grundplatte mit Druck beaufschlagt und sie in einer Lage hält, damit sie beim Einhängen des Bandes in die Fanghaken an der Grundplatte nicht verrutscht.

Die Aufnahme wird bei der Montage gegen ein Rohr gedrückt, das Band um das Rohr geschlungen und endseits mit den Schlitzen in die Fanghaken eingelegt. Durch Anziehen der Schraube wird die Grundplatte zum Steg hinbewegt und strafft gleichzeitig das Band. Dadurch werden die bevorzugt profiliert ausgebildeten freien Kanten der Wände der Aufnahme gegen den Gegenstand gepresst und legen somit den Halter wiederlösbar an dem Gegenstand oder den Gegenstand an dem Halter fest.

Damit das Band ggf. mehrmals verwendet werden kann, werden vorzugsweise duktile Werkstoffe aus rostfreiem hoch-legierten Stahl verwendet. Jedoch können auch hier andere Werkstoffe bspw. herkömmliches Metall, Kupfer oder sogar auch Kunststoff verwendet werden.

Damit ein Schild oder sonstiger Gegenstand sehr leicht an der Aufnahme befestigt werden kann, duchgreift die Schraube, welche durch die Bohrung des Steges geführt und mit der Grundplatte verbunden ist, eine der Bodenfläche der Aufnahme zugeordnete Platte. Diese Platte kann als Aufnahme für ein Schild oder sonstigen Gegenstand ausgebildet sein. Derartige Schilder dienen dazu, um bspw. einen bestimmten Gegenstand zu definieren oder zu bezeichnen oder eine bestimmte Durchflussrichtung eines Rohres anzugeben. Ferner kann der Halter als Aufnahme für Strassenschilder od.dgl. Verwendung finden.

In einem weiteren Ausführungsbeispiel der vorliegenden Erfindung verbindet ein Steg nahe dem Gegenstand die entsprechenden Wände. Diese ragen von dem Steg nach außen ab. Zwischen diesen beiden Wänden ist die Grundplatte mit entsprechend ausgebildeten Fanghaken angeordnet und steht mit der oben erwähnten Schraube in Verbindung. Diese Schraube durchgreift eine Platte, welche auf den freien Enden der Wände aufliegt und als Gegenlager dient.

Ein weiterer, wesentlicher Vorteil der vorliegenden Erfindung ergibt sich daraus, dass ein Band mit Schlitzen bzw. Löcher, wie es aus dem Stand der Technik bekannt ist, als Meterware verwendet wird. Das Band wird entsprechend dem Durchmesser eines Gegenstandes bzw. Rohres abgelängt und an dem Halter montiert. Dabei greifen in die entsprechenden Schlitze des Bandes Fanghaken oder Halteelemente ein. Diese weist eine Grundplatte auf, die in der Aufnahme des Halters bewegbar angeordnet ist.

Das Band greift mit seinen Schlitzen in die beidseitig der Grundplatte angeordneten Fanghaken, so dass ein Gegenstand vom Band umfangen werden kann. Durch entsprechendes Verdrehen der Schraube bewegt sich die Grundplatte gegen die Platte und spannt die beiden Enden des Bandes. Somit wird der Gegenstand gegen den bevorzugt profilierten Steg gepresst bzw. gespannt.

Ein entsprechendes Lösen erfolgt durch Drehen der Schraube in entgegengesetzte Richtung, wobei sich die Grundplatte in Richtung des Gegenstandes bewegt. An diese Platte kann ebenso, wie oben beschrieben, ein Schild oder sonstiger Gegenstand befestigt werden.

Eine weitere Möglichkeit, eine Platte nahe einer Bodenfläche der Aufnahme in bestimmte Richtungen vorzufixieren, ist dann gegeben, wenn Ausnehmungen in die Aufnahme eingeformt sind, um darin eine Platte einzusetzen. Die Ausnehmungen können auch über Kreuz angeordnet sein, so dass die Platte in eine horizontale bzw. waagrechte Position gebracht werden kann. Auf diese Weise kann ein Schild einfach verdreht werden.

Als besonders vorteilhaft hat sich erwiesen, an einer derartige Platte einen Schildträger zu befestigen, welcher mit seitlich gegenüberliegenden Druckstreifen versehen ist. Diese Druckstreifen können rast- bzw. nasenartig ausgebildet sein, um ein Schild darin einzuspannen. Durch entsprechendes Verbiegen bzw. Verdrücken des Schildträgers lässt sich ein so eingespanntes Schild leicht wieder entfernen oder auswechseln.

In einem weiteren Ausführungsbeispiel der Erfindung ist der Schildträger nicht über Schrauben mit der entsprechenden Aufnahme verbunden, sondern auf eine Aufnahme aufgeklipst. Hierzu greift der Schildträger bevorzugt mit entsprechenden Klemmnocken in Nuten an der Aufnahme ein.

Mit der vorliegenden Erfindung ist ein Halter geschaffen, welcher sehr universell einsetzbar ist, da das Band auf den jeweiligen Umfang der Gegenstände abgepasst werden kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht eines erfindungsgemässen Rohrhalters in Gebrauchslage.
Figur 2 einen Querschnitt durch den Rohrhalter in Gebrauchslage gemäss Figur 1 entlang Linie II-II;
Figur 3 eine Unteransicht der Rohrhalter aus Figur 1 ohne ein Band;
den Figuren 4a bis c Seitenansicht und die dazu gehörige jeweilige Drauf- und Unteransicht eines Teiles des Rohrhalters nach Figur 1;
Figur 5 einen Längsschnitt durch ein weiteres Ausführungsbeispiel einer erfindungsgemässen Grundplatte;
Figuren 6a bis 6c eine Draufsicht, Seitenansicht und um 90° gedrehte weitere Seitenansicht eines weiteren Ausführungsbeispiels einer Aufnahme;
Figur 7 eine Seitenansicht eines weiteres Ausführungsbeispiels eines erfindungsgemässen Rohrhalters in Gebrauchslage;
Figur 8 einen Querschnitt durch den Rohrhalter in Gebrauchslage gemäss Figur 7 entlang Linie VI-VI;
den Figuren 9a bis 9c ein weiteres Ausführungsbeispiel eines Teiles des Rohrhalters gemäss Figur 1 in Draufsicht und zwei Seitenansichten;
den Figuren 9d bis 9e jeweils Draufsichten auf einen Rohrhalter in zwei möglichen Gebrauchslagen;
Figur 10 eine Seitenansicht des Rohrhalters mit einer Aufnahme aus den Figuren 9d oder 9e in einer weiteren Gebrauchslage;
Figuren 11a und 11b eine Draufsicht bzw. einen Schnitt durch ein weiteres Ausführungsbeispiel eines erfindungsgemässen Schildträgers.

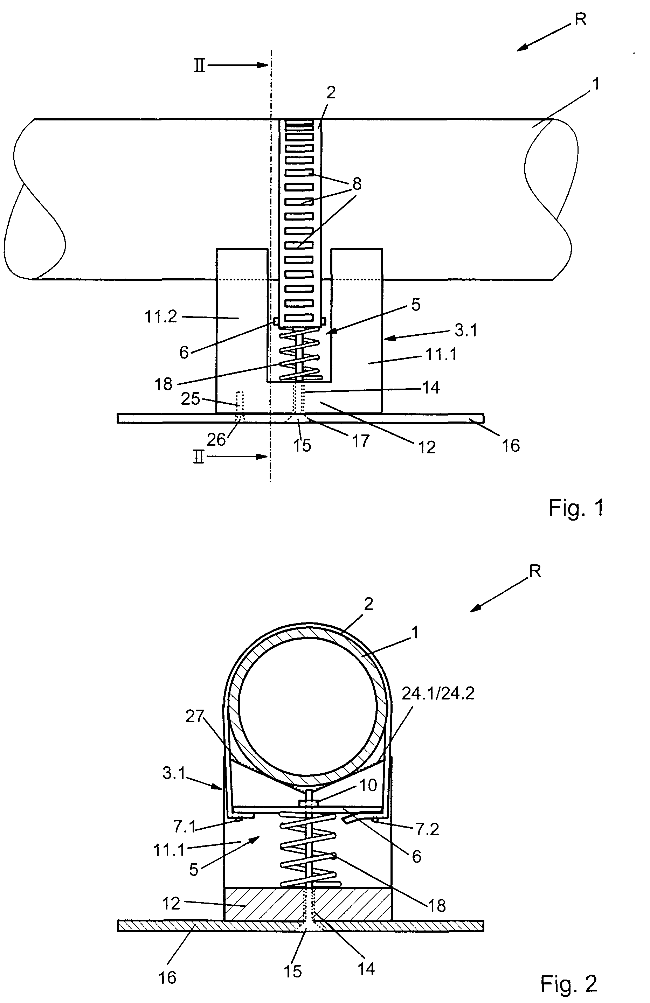

Gemäss Figur 1 weist ein erfindungsgemässer Halter R, insbesondere Rohrhalter zum wiederlösbaren Festlegen an einem Gegenstand 1, insbesondere an einem Rohr, eine Aufnahme 3.1 auf, in welcher eine Zugeinrichtung 5 angeordnet ist. Die Aufnahme 3.1 wird an dem Rohr 1 durch ein Band 2 festgehalten, welches das Rohr 1 teilweise umgreift.

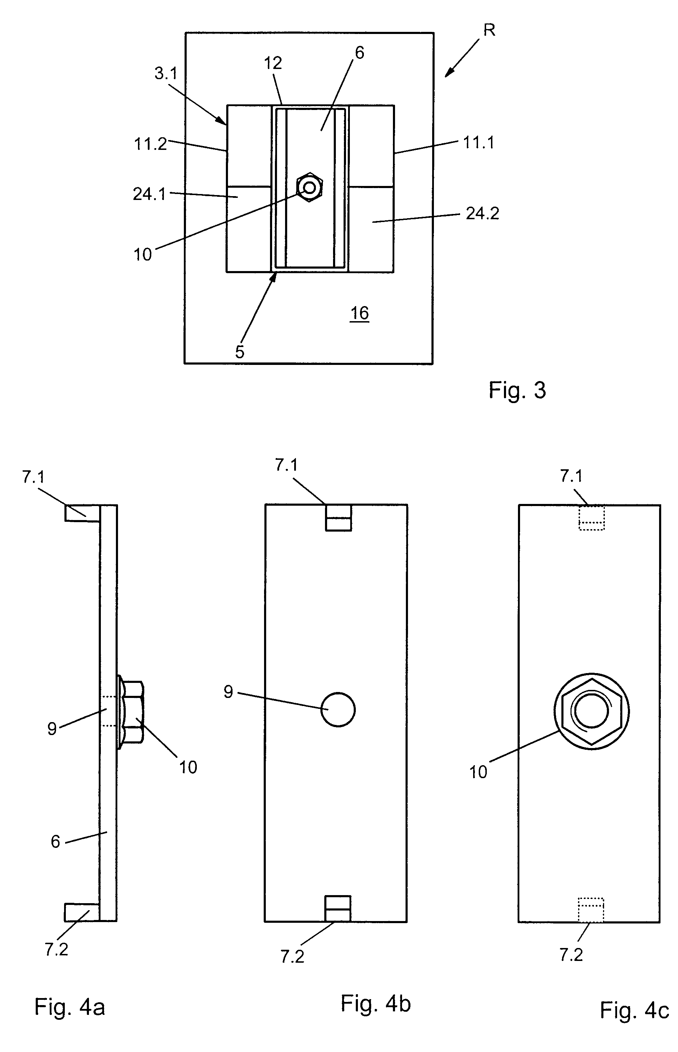

Die Zugeinrichtung 5 weist eine Grundplatte 6 auf, welche in den Figuren 4a bis c vergrößert dargestellt ist. Von einer Seite der Grundplatte 6 ragen bevorzugt endseits nach innen gebogene Fanghaken 7.1 und 7.2 zum Einsetzen in Öffnungen 8 im Band 2 ab. Die Öffnungen können Schlitze, Löcher od. dgl. sein.

Auf der anderen Seite der Grundplatte 6 ist eine Mutter 10 fest mit der Grundplatte 6 verbunden. Im Bereich eines Innengewindes der Mutter 10 ist die Grundplatte 6 mit einer Öffnung 9 versehen.

Diese Grundplatte 6 als Bestandteil der Zugeinrichtung 5 sitzt zwischen zwei Wänden 11.1, 11.2 der Aufnahme 3.1. Die Wände 11.1, 11.2 sind über einen äußeren Steg 12 miteinander zur Aufnahme 3.1 verbunden. In etwa mittig des Steges 12 ist eine Bohrung 14 vorgesehen, durch welche eine Schraube 15 greift, um die Grundplatte 6 mit der Aufnahme 3.1 zu verbinden. Zwischen der Grundplatte 6 und dem unteren Steg 12 ist ein Federelement 18 eingesetzt und beaufschlagt die Grundplatte 6 in Richtung des Rohres 1 mit Druck, wobei das Federelement 18 die Schraube 15 umschlingt. Durch Verdrehen der Schraube 15 wird die Grundplatte 6 zum Steg 12 entlang der Schraube 15 hin- und herbewegt.

Beim Anziehen der Schraube 15 wird das Band 2 beidseitig gestrafft. Das Rohr 1 wird dadurch in Keilnuten 24.1 und 24.2 in den Wänden 11.1, 11.2 der Aufnahme 3.1 gepresst und festgelegt, wobei die Keilnuten mit einer klebenden Schicht belegt sein können so dass der Monteur zum Einhängen des Bandes 2 beide Hände frei hat.

Ein weiterer wesentlicher Vorteil der vorliegenden Erfindung ergibt sich daraus, dass das Band 2 für beliebige Gegenstände oder Rohre mit unterschiedlichen Durchmessern unterschiedlich abgelängt werden kann. Das Band 2 muss nach dem Ablängen und Umgreifen des Gegenstandes 1 nur beidseitig in die Fanghaken 7 der Grundplatte 6 der Zugeinrichtung 5 eingehängt werden. Insofern kann diesem Halter R, wie in den Figuren 1 und 2 dargestellt, jeder beliebige Gegenstand 1 mittels eines beliebig verlängerbaren Bandes zugeordnet werden.

Der Fanghaken kann auch einseitig so ausgebildet sein, dass das Band selbsthaltend hängt und so der Halter auf den Gegenstand aufgesetzt wird. Mit einer Hand kann dann das Band in den anderen Fanghaken eingehängt werden.

Zur Kennzeichnung von Rohrleitungen od.dgl dient eine Platte 16, auf der beispielsweise Schilder festgelegt werden können. Diese können auf- oder eingespannt, aufgeklebt, aufgeschraubt, genietet oder sonstwie verbunden werden. Die Platte 16 wird bevorzugt von der Schraube 15 gehalten, mittels welcher auch die Grundplatte 6 der Zugeinrichtung 5 hin- und herbewegt wird. Wird die Schraube 15 gelöst, so kann die Platte 16 von der Aufnahme 3.1 abgehoben werden, bis ein Arretierstift 25 aus einer Arretierbohrung 26 gleitet. Die Platte 16 wird dann um 90° gedreht, wobei der Arretierstift 25 eine weitere Arretierbohrung findet, um die Platte in dieser Position festzulegen. Dies gilt auch für einen später beschriebenen Schildträger 22.

In dem Ausführungsbeispiel gemäss Figur 2 ist der Gegenstand 1 querschnittlich als Rohr ausgebildet, wobei das Band 2 diesen umgreift. Damit der Gegenstand 1 an der Aufnahme 3.1 Halt findet, sind die Wände 11.1, 11.2 am freien Ende, wie oben erwähnt, mit Keilnuten 24.1, 24.2 versehen. Die Profile können jedoch jeder Form des Gegenstandes 1 angepasst sein.

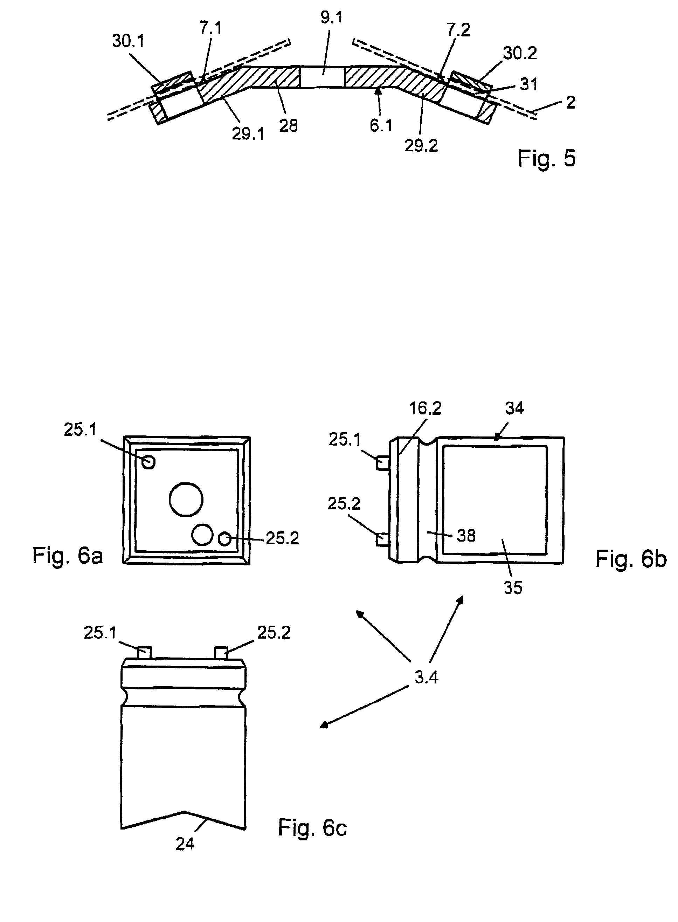

In Figur 5 ist ein weiteres Ausführungsbeispiel einer Grundplatte 6.1 gezeigt. Dabei ist die Öffnung zum Einsetzen der nicht näher gezeigten Schraube 15 als Gewindebohrung 9.1 ausgebildet. Die Gewindebohrung 9.1 befindet sich in einem Mittelteil 28, von dem beidseits Schenkel 29.1 und 29.2 abgekantet sind. Auf dem Schenkel 29.1 und 29.2 sitzt jeweils ein Fanghaken 7.1 und 7.2 auf, dem eine Führung 30.1 bzw. 30.2 vorgeschaltet ist. Die Führung 30.1 bzw. 30.2 wird bevorzugt aus dem Schenkel 29.1 bzw. 29.2 ausgeschnitten und entsprechend abgekantet, so dass sie einen Kanal 31 für das Band 2 ausbildet.

Dieses Ausführungsbeispiel einer Grundplatte 6.1 hat den Vorteil, dass das Band 2 bereits vor der Montage einends in die Führung 30.1 oder 30.2 eingeschoben sein kann und mittels des Fanghakens 7.1 bzw. 7.2 selbsthaltend festgelegt ist.

Zur Montage kann die Grundplatte 6.1 bzw. die entsprechende Aufnahme auf den Gegenstand 1 aufgesetzt und das Band um den Gegenstand 1 geschlungen werden. Andernends wird das Band 2 in die Führung 30.2 oder 30.1 eingeschoben, wobei das Bandende über den Fanghaken 7.2 bzw. 7.1 gleitet und einrastet. Dies erlaubt eine schnelle und kostengünstige Montage.

Die Grundplatte kann im übrigen aus einem beliebigen Werkstoff sein. Bevorzugt wird Edelstahl oder Kunststoff.

In den Figuren 6a - 6c ist ein weiteres Ausführungsbeispiel einer Aufnahme 3.4 gezeigt. Diese Aufnahme 3.4 weist einen rahmenartigen Grundkörper 34 auf, der eine Durchgreiföffnung 35 besitzt.

Gegenüber dem Steg 36 befindet sich als Teil des Grundkörpers 34 eine Platte 16.2, in die eine Umfangsnut 38 eingeformt ist. Deren Funktion wird später beschrieben.

Erkennbar sind ferner zwei Arretierstifte 25.1 und 25.2.

Im Rahmen der vorliegenden Erfindung sollen noch andere mögliche Zugeinrichtungen 5 liegen, welche bspw. an Schienen innerhalb oder ausserhalb der Aufnahme geführt sein können. Auch eine einseitige Befestigungsweise eines Bandes an einer Zugeinrichtung 5 ist hier denkbar, wenn das Band bspw. an einem feststehenden Haken der Aufnahme 3.1 bis 3.3 eingehängt und andererseits über eine Zugeinrichtung 5 gestrafft werden kann.

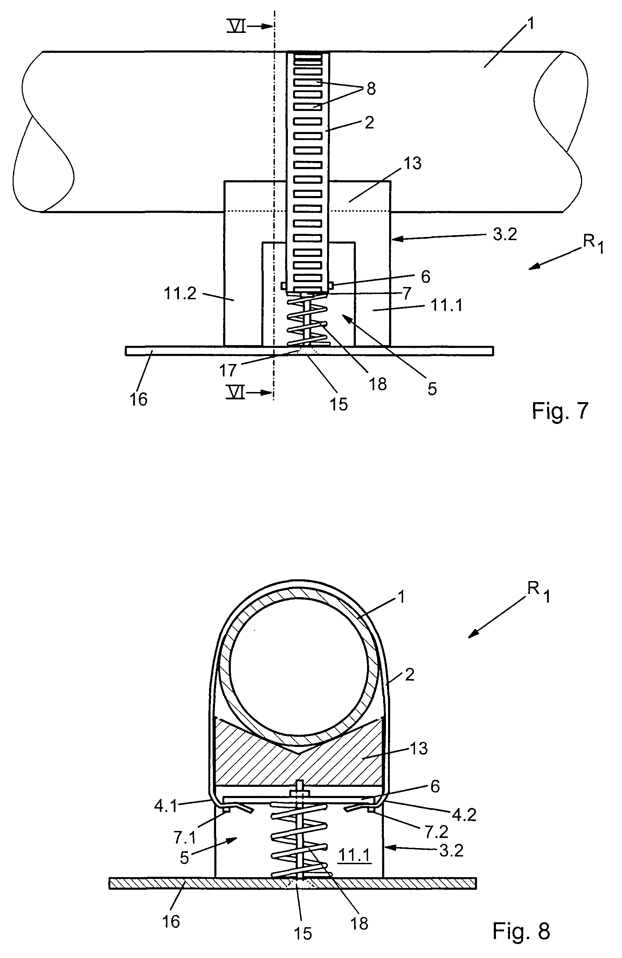

In einem weiteren Ausführungsbeispiel der vorliegenden Erfindung gemäß Figur 7 ist ein Halter R₁ dargestellt, welcher eine Aufnahme 3.2 mit Zugeinrichtung 5 aufweist. Eine Besonderheit dieser Aufnahme 3.2 liegt darin, dass ein innerer Steg 13 die beiden Wände 11.1, 11.2 miteinander verbindet und dieser an dem Gegenstand 1 mit einer Keilnut anliegt. Dies wird, wie oben beschrieben, über die Schraube 15 gehalten, die andernends eine Öffnung 17 in der Platte 16 durchgreift. Zwischen Platte 16 und Grundplatte 6 sitzt das Federelement 18 und beaufschlagt die Grundplatte 6 mit Druck. Wie oben beschrieben, greifen in die Öffnungen 8 des Bandes 2 die entsprechende Fanghaken 7.1, 7.2 der Grundplatte 6.

Auch hier wird durch Anziehen der Schraube 15 die Grundplatte 6 der Zugeinrichtung 5 vom Rohr 1 wegbewegt, so dass sich das beidseitig eingespannte und um Rohr 1 gelegte Band 2 strafft. So wird das Rohr 1 in die Keilnut des inneren Steges 13 der Aufnahme 3.2 gezogen und legt den Halter R₁ in dieser wiederlösbar fest. Die Platte 16 stützt sich an den Stirnseiten der Wände 11.1 und 11.2 ab.

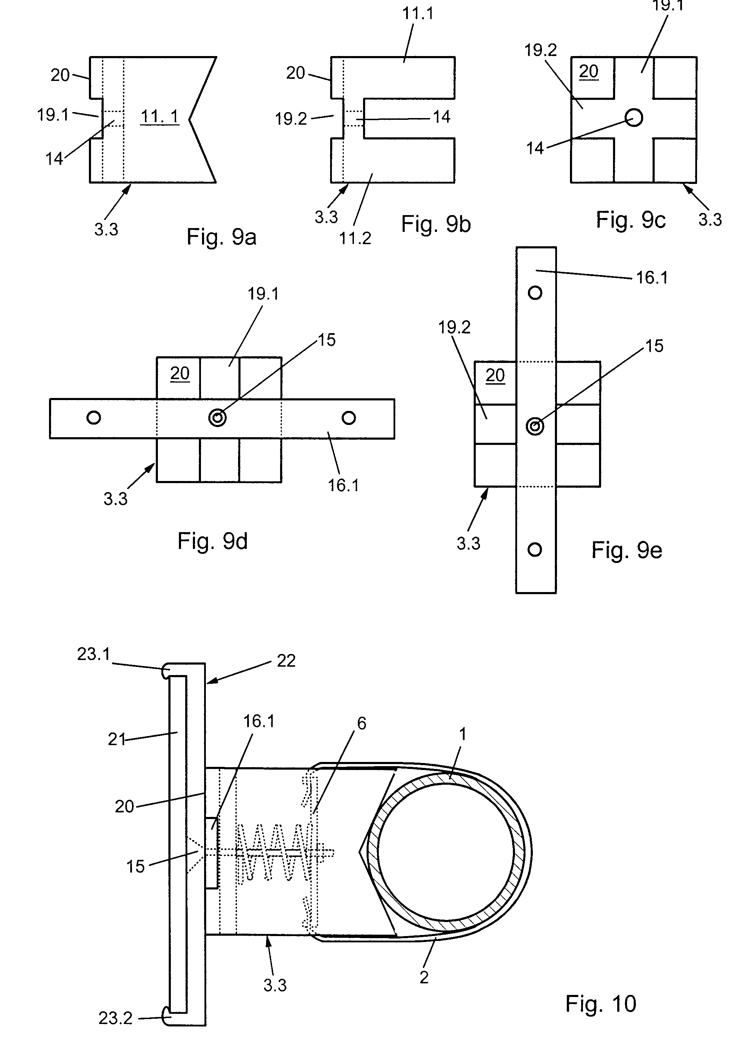

In weiteren Ausführungsbeispielen der vorliegenden Erfindung gemäss den Figuren 9a bis 9c ist eine weitere Aufnahme 3.3 dargestellt, die im wesentlichen der Aufnahme 3.1 entspricht. Jedoch sind in einer Bodenfläche 20 Ausnehmungen 19.1, 19.2, bevorzugt über Kreuz, wie es in Figur 9c dargestellt ist, vorgesehen. In diesen Ausnehmungen 19.1, 19.2 liegt eine Platte 16.1 und wird über das Befestigungselement 15 gehalten. So kann optional, wie es in den Figuren 9d und 9e dargestellt ist, die Platte 16.1 entweder horizontal oder vertikal zur Aufnahme 3.3 ausgerichtet werden. Ist die Grundplatte 6 noch nicht fest angezogen, so kann durch Herausziehen der Platte 16.1 aus einer Ausnehmung 19.1 oder 19.2 gegen den Druck des Federelements 18 eine waagrechte oder senkrechte Position der Platte 16.1 gewechselt werden.

An der Platte 16.1 können unterschiedliche Gegenstände befestigt werden. Bevorzugt wird allerdings ein Schildträger 22 (siehe Figur 10) angebracht, wobei daran gedacht ist, die Schraube 15 auch zum Befestigen des Schildträgers 22 an der Platte 16.1 zu verwenden. Dies hat den Vorteil, dass gleichzeitig die Grundplatte 6 beim Verdrehen der Schraube 15 zum Festziehen bzw. Lösen des Bandes 2 verwendet werden kann.

Bevorzugt ist der Schildträger 22 mit entsprechend beidseitig gegenüberliegend ausgebildeten Druckstreifen 23.1, 23.2 versehen, die ein Schild 21 wiederlösbar aufnehmen. Durch einfaches Beaufschlagen mit Druck von den entsprechend anderen Seiten bzw. durch Verbiegen oder Nachaussendrücken der Druckstreifen 23.1, 23.2 lässt sich das Schild 21 auf einfache Weise auswechseln bzw. aus dem Schildträger 22 entnehmen.

Die Platte 16.1 kann selbstverständlich auch entfallen, so dass der Schildträger 22 der Aufnahme 3.3 unmittelbar anliegt. Der Schildträger erhält dann ein Senkloch für den Kopf der Schraube 15 und die zu Figur 1 erwähnten zwei Bohrungen 26 zu Aufnahme des Arretierstiftes 25.

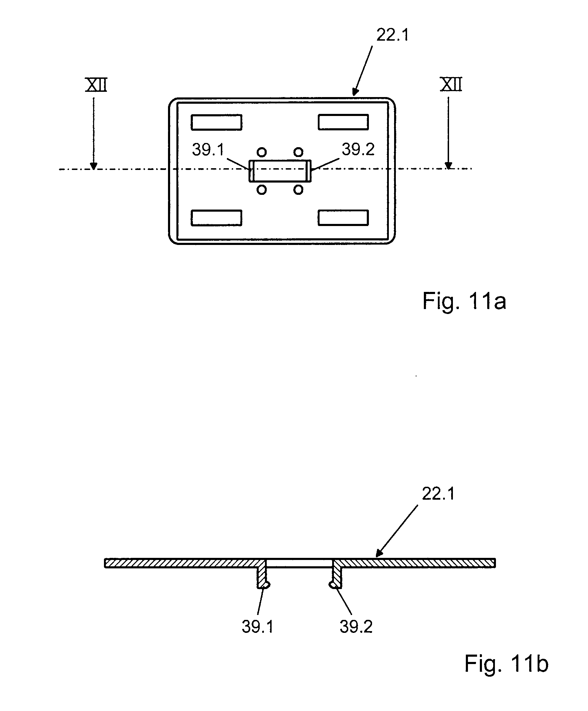

In Figur 11a und llb ist ein Schildträger 22.1 gezeigt, der auf eine Aufnahme 3.4 gemäss den Figuren 6a - 6c aufgeklipst werden kann. Zu diesem Zweck weist dieser Schildträger 22.1 Klemmnocken 39.1 und 39.2 auf, welche in die Umfangsnut 38 eingeklipst werden können. Dies hat den Vorteil, dass an der Aufnahme selbst mehr Raum zum Einhängen des Bandes 2 vorhanden ist.

| **Positionszahlenliste** | | | | | |
|---|---|---|---|---|---|
| 1 | Rohr | 34 | Grundkörper | 67 | |
| 2 | Band | 35 | Durchgreiföff-nung | 68 | |
| 3 | Aufnahme | 36 | Steg | 69 | |
| 4 | | 37 | Halteelement | 70 | |
| 5 | Zugeinrichtung | 38 | Umfangsnut | 71 | |
| 6 | Grundplatte | 39 | Klemmnocken | 72 | |
| 7 | Fanghaken | 40 | | 73 | |
| 8 | Öffnung | 41 | | 74 | |
| 9 | Öffnung | 42 | | 75 | |
| 10 | Mutter | 43 | | 76 | |
| 11 | Wand | 44 | | 77 | |
| 12 | äußerer Steg | 45 | | 78 | |
| 13 | innerer Steg | 46 | | 79 | |
| 14 | Bohrung | 47 | | R | Halter |
| 15 | Schraube | 48 | | | |
| 16 | Platte | 49 | | | |
| 17 | Öffnung | 50 | | | |
| 18 | Federelement | 51 | | | |
| 19 | Ausnehmung | 52 | | | |
| 20 | Bodenfläche | 53 | | | |
| 21 | Schild | 54 | | | |
| 22 | Schildträger | 55 | | | |
| 23 | Druckstreifen | 56 | | | |
| 24 | Keilnut | 57 | | | |
| 25 | Arretierstift | 58 | | | |
| 26 | Arretierbohrung | 59 | | | |
| 27 | klebende Schicht | 60 | | | |
| 28 | Mittelteil | 61 | | | |
| 29 | Schenkel | 62 | | | |
| 30 | Führung | 63 | | | |
| 31 | Kanal | 64 | | | |
| 32 | Stift | 65 | | | |
| 33 | Schraube | 66 | | | |

## Patentansprüche

1. Halter zum wiederlösbaren Festlegen eines Gegenstandes (1) oder zum Festlegen an einem Gegenstand, mit einem Band, welches (2) den Gegenstand (1) teilweise umgreift, mit einer Aufnahme (3.1, 3.2, 3.3 ), wobei das Band die Aufnahme an dem Gegenstand (1) festlegt, und mit einer Zugeinrichtung,
dadurch gekennzeichnet,
dass die beiden Enden des Bandes (2) an einem bewegbaren Bestandteil (6, 6.1) der Zugeinrichtung (5) montiert sind und das Band (2) über diese Zugeinrichtung (5) bzw. den Bestandteil (6, 6.1) mit der Aufnahme (3.1, 3.2, 3.3) verbunden ist.

2. Halter nach Anspruch 1, dadurch gekennzeichnet, dass der bewegbare Bestandteil der Zugeinrichtung (5) eine Grundplatte (6, 6.1) ist, an welcher zumindest ein Ende (4.1, 4.2) des Bandes (2) wiederlösbar festgelegt ist.

3. Halter nach Anspruch 2, dadurch gekennzeichnet, dass von der Grundplatte (6, 6.1) beiderends Fanghaken (7, 7.1, 7.2) abragen, welche in Öffnungen (8) des Bandes (2) greifen.

4. Halter nach Anspruch 3, dadurch gekennzeichnet, dass dem Fanghaken (7.1, 7.2) eine Führung (30.1, 30.2) vorgeschaltet ist.

5. Halter nach einem der Ansprüche 2 bis 4, dadurch gekennzeichnet, dass die Grundplatte (6, 6.1) zwischen Wänden (11.1 und 11.2) der Aufnahme (3, 3.1, 3.2) bewegbar angeordnet ist.

6. Halter nach Anspruch 5, dadurch gekennzeichnet, dass die Wände (11.1, 11.2) über einen äußeren Steg (12) oder einen inneren Steg (13) zur Aufnahme (3.1, 3.2, 3.3) verbunden sind.

7. Halter nach Anspruch 6, dadurch gekennzeichnet, dass der äußerer Steg (12) oder eine Platte (16) mit einer Bohrung (14) oder Öffnung (17) versehen ist, durch welche eine Schraube (15) verläuft, die in einer an der Grundplatte (6) festgelegten Mutter (10) dreht.

8. Halter nach Anspruch 7, dadurch gekennzeichnet, dass zwischen der Grundplatte (6, 6.1) und dem Steg (12) oder der Platte (16) ein Federelement (18) eingesetzt ist.

9. Halter nach Anspruch 8, dadurch gekennzeichnet, dass das Federelement (18) die Schraube (15) umfängt.

10. Halter nach wenigstens einem der Ansprüche 5 bis 9, dadurch gekennzeichnet, dass die Wände (11.1, 11.2) an ihrem freien Ende bzw. der Steg (13) profiliert und bevorzugt selbstklebend ausgebildet ist/sind.

11. Halter nach Anspruch 10, dadurch gekennzeichnet, dass die Profilierung der äusseren Form des Gegenstandes (1) angepasst ist.

12. Halter nach wenigstens einem der Ansprüche 1 bis 11, dadurch gekennzeichnet, dass in eine Bodenfläche (20) der Aufnahme (3.3) kreuzartig zueinander angeordnete Ausnehmungen (19.1, 19.2) eingeformt sind.

13. Halter nach Anspruch 12, dadurch gekennzeichnet, dass in die Ausnehmung (19.1 oder 19.2) ein Plattenteil (16.1) eingreift, welches mittels des Befestigungselementes (15) in einer der beiden Ausnehmungen (19.1, 19.2) gehalten ist.

14. Halter nach Anspruch 13, dadurch gekennzeichnet, dass dem Plattenteil (16.1) ein Schild (21) und/oder ein Schildträger (22) zugeordnet ist/sind.

15. Halter nach Anspruch 14, dadurch gekennzeichnet, dass das Schild (21) in dem Schildträger (22) wiederlösbar festliegt.

16. Halter nach Anspruch 14 oder 15, dadurch gekennzeichnet, dass zwei gegenüberliegende Druckstreifen (23.1, 23.2) an dem Schildträger (22) vorgesehen sind.

17. Halter nach wenigstens einem der Ansprüche 1 bis 13, dadurch gekennzeichnet, dass der Aufnahme (3.4) ein Schildträger (22.1) aufgeklipst ist.

18. Halter nach Anspruch 17, dadurch gekennzeichnet, dass die Aufnahme (3.4) zumindest eine Nut (38) zur Aufnahme eines Klemmnockens (39.1, 39.2) an dem Schildträger (22.1) aufweist.

## Claims

1. Holder for the releasable securement of an article (1) or for securement on an article, said holder having a band (2) which partially encircles the article (1), a receiver (3.1, 3.2, 3.3), whereby the band secures the receiver on the article (1), and a tensioning device, characterised in that the two ends of the band (2) are mounted on a displaceable component part (6, 6.1) of the tensioning device (5), and the band (2) is connected to the receiver (3.1, 3.2, 3.3) via this tensioning device (5) or respectively via the component part (6, 6.1).

2. Holder according to claim 1, characterised in that the displaceable component part of the tensioning device (5) is a base plate (6, 6.1), on which at least one end (4.1, 4.2) of the band (2) is releasably secured.

3. Holder according to claim 2, characterised in that attachment hooks (7, 7.1, 7.2), which engage in openings (8) of the band (2), protrude at both ends from the base plate (6, 6.1).

4. Holder according to claim 3, characterised in that a guide (30.1, 30.2) precedes the attachment hook (7.1, 7.2).

5. Holder according to one of claims 2 to 4, characterised in that the base plate (6, 6.1) is displaceably disposed between walls (11.1 and 11.2) of the receiver (3, 3.1, 3.2).

6. Holder according to claim 5, characterised in that the walls (11.1, 11.2) are connected to the receiver (3.1, 3.2, 3.3) via an outer web (12) or an inner web (13).

7. Holder according to claim 6, characterised in that the outer web (12) or a plate (16) is provided with a bore (14) or opening (17), through which extends a screw (15), which turns in a nut (10) secured on the base plate (6).

8. Holder according to claim 7, characterised in that a resilient element (18) is inserted between the base plate (6, 6.1) and the web (12) or the plate (16).

9. Holder according to claim 8, characterised in that the resilient element (18) encloses the screw (15).

10. Holder according to at least one of claims 5 to 9, characterised in that the walls (11.1, 11.2) at their free end, or respectively the web (13), are/is profiled and are/is preferably configured to be self-adhesive.

11. Holder according to claim 10, characterised in that the profiling is adapted to the outer shape of the article (1).

12. Holder according to at least one of claims 1 to 11, characterised in that recesses (19.1, 19.2), disposed in a cross-shaped manner relative to each other, are provided in a base surface (20) of the receiver (3.3).

13. Holder according to claim 12, characterised in that a plate part (16.1), which is retained by means of the securement element (15) in one of the two recesses (19.1, 19.2), engages in the recess (19.1 or 19.2).

14. Holder according to claim 13, characterised in that a shield (21) and/or a shield carrier (22) are/is associated with the plate part (16.1).

15. Holder according to claim 14, characterised in that the shield (21) is releasably secured in the shield carrier (22).

16. Holder according to claim 14 or 15, characterised in that two oppositely situated printed strips (23.1, 23.2) are provided on the shield carrier (22).

17. Holder according to at least one of claims 1 to 13, characterised in that a shield carrier (22.1) is clipped to the receiver (3.4).

18. Holder according to claim 17, characterised in that the receiver (3.4) has at least one groove (38) to accommodate a clamping cam (39.1, 39.2) on the shield carrier (22.1).

## Revendications

1. Support pour réaliser une fixation amovible d'un objet (1) ou sur un objet, comportant une bande (2) enfermant partiellement l'objet, un logement (3.1, 3.2, 3.3) que la bande fixe sur l'objet (1), et un dispositif de traction,
caractérisé en ce que
les deux extrémités de la bande (2) sont montées sur un composant (6, 6.1) du dispositif de traction (5), et la bande (2) est reliée au logement (3.1, 3.2, 3.3) par le dispositif de traction (5) et par le composant (6, 6.1).

2. Support selon la revendication 1,
caractérisé en ce que
le composant mobile du dispositif de traction (5) est une plaque de base (6, 6.1) sur laquelle peut être fixée de manière amovible, au moins une extrémité (4.1, 4.2) de la bande (2).

3. Support selon la revendication 2,
caractérisé en ce qu'
aux deux extrémités de la plaque de base (6, 6.1) dépassent des crochets de prise (7, 7.1, 7.2) engagés dans des ouvertures (8) de la bande (2).

4. Support selon la revendication 3,
caractérisé en ce qu'
un guidage (30.1, 30.2) est disposé en avant du crochet de prise (7.1, 7.2) correspondant.

5. support selon l'une quelconque des revendications 2 à 4,
caractérisé en ce que
la plaque de base (6, 6.1) peut se déplacer entre des parois (11.1 et 11.2) du logement (3, 3.1, 3.2).

6. Support selon la revendication 5,
caractérisé en ce que
les parois (11.1, 11.2) sont reliées par une barrette externe (12) ou interne (13) par rapport au logement (3.1, 3.2, 3.3).

7. Support selon la revendication 6,
caractérisé en ce que
la barrette externe (12) ou une plaque (16) présente un perçage (14) ou une ouverture (17) que traverse une vis (15) se vissant dans un écrou (10) fixé sur la plaque de base (6).

8. Support selon la revendication 7,
caractérisé en ce qu'
un élément élastique (18) est intercalé entre la plaque de base (6, 6.1) et la barrette (12) ou la plaque (16).

9. Support selon la revendication 8,
caractérisé en ce que
l'élément élastique (18) entoure la vis (15).

10. Support selon au moins l'une quelconque des revendications 5 à 9,
caractérisé en ce que
chaque paroi (11.1, 11.2) à son extrémité libre ou la barrette (13) est profilée et de préférence autoadhésive.

11. Support selon la revendication 10,
caractérisé en ce que
le profil est adapté à la forme externe de l'objet (1).

12. Support selon au moins l'une quelconque des revendications 1 à 11,
caractérisé en ce que
dans le fond (20) du logement (3.3) sont creusés deux évidements (19.1, 19.2) formant une croix.

13. Support selon la revendication 12,
caractérisé en ce que
dans l'évidement (19.1 ou 19.2) est engagée une plaquette (16.1) qui est maintenue dans l'évidemment (19.1 ou 19.2) par l'élément de fixation (15).

14. Support selon la revendication 13,
caractérisé en ce qu'
à la plaquette (16.1) est associée une étiquette (21) et/ou un support d'étiquette (22).

15. Support selon la revendication 14,
caractérisé en ce que
l'étiquette (21) peut être montée de manière amovible dans le support d'étiquette (22).

16. Support selon les revendications 14 ou 15,
caractérisé en ce que
deux bandes de pression (23.1, 23.2) sont prévues face à face dans le support d'étiquette (22).

17. Support selon au moins l'une quelconque des revendications 1 à 13,
caractérisé en ce que
sur le logement (3.4) est clipsé un support d'étiquette (22.1).

18. Support selon la revendication 17,
caractérisé en ce que
le logement (3.4) présente au moins une rainure (38) destinée à recevoir une dent de serrage (39.1, 39.2) dont est équipé le support d'étiquette (22.1).
